(19) Europäisches Patentamt
European Patent Office
Office européen des brevets

(11) Numéro de publication: **0 392 947 A2**

(12) **DEMANDE DE BREVET EUROPEEN**

(21) Numéro de dépôt: **90420184.5**

(22) Date de dépôt: **11.04.90**

(51) Int. Cl.5: **C08G 77/54, C08G 77/442**

(30) Priorité: **13.04.89 FR 890517**

(43) Date de publication de la demande: **17.10.90 Bulletin 90/42**

(84) Etats contractants désignés: **AT BE CH DE DK ES FR GB GR IT LI LU NL SE**

(71) Demandeur: **RHONE-POULENC CHIMIE**
**25, quai Paul Doumer**
**F-92408 Courbevoie Cédex(FR)**

(72) Inventeur: **Clouet, Gilbert**
**6, rue des Jardins**
**F-67610 La Wantzenau(FR)**

(74) Mandataire: **Seugnet, Jean Louis et al**
**RHONE-POULENC CHIMIE Service Brevets**
**Chimie Centre de Recherches des Carrières**
**B.P. 62**
**F-69192 Saint-Fons Cédex(FR)**

(54) **Copolymère séquencé polydiorganosiloxane/disulfure de thiurame, sa préparation et son utilisation dans la polymérisation de monomères vinyliques.**

(57) La présente invention concerne un copolymère séquencé polydiorganosiloxane/disulfure de thiurame de formule :

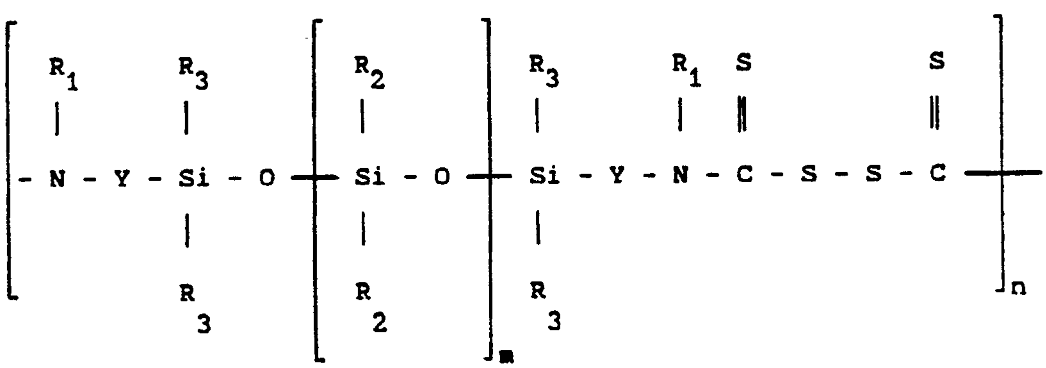

(1)

préparé par réaction de l'$\alpha,\omega$-(amino)diorganopolysiloxane correspondant sur $CS_2$ an présence d'amine tertiaire et d'agent oxydant tel qu'$I_2$.

Utilisation du copolymère de formule (1) comme "polyiniferter", c'est-à-dire comme initiateur de radicaux libres, agent de transfert et agent bloqueur de chaîne lors de la polymérisation radicalaire de monomères vinyliques tels que les monomères acrylate et styrène, en vue d'obtenir un copolymère séquencé polydiorganosiloxane/polyvinylique.

EP 0 392 947 A2

# COPOLYMERE SEQUENCE POLYDIORGANOSILOXANE/DISULFURE DE THIURAME, SA PREPARATION ET SON UTILISATION DANS LA POLYMERISATION DE MONOMERES VINYLIQUES

La présente invention concerne un copolymère séquencé polydiorganosiloxane/disulfure de thiurame, son procédé de fabrication et son utilisation en particulier dans la polymérisation radicalaire de monomères vinyliques en vue d'obtenir un copolymère à bloc polydiorganosiloxane/polyvinylique.

Le but de la présente invention est donc de proposer un procédé industriel d'obtention de copolymère séquencé polydiorganosiloxane/polyvinylique bloqué à chaque extrémité de sa chaîne par un segment polydiorganosiloxane au moyen d'un procédé de polymérisation uniquement radicalaire.

Ce but est atteint grâce à la préparation et à l'utilisation d'un copolymère séquencé polydiorganosiloxane/disulfure de thiurame spécifique.

Dans la revue MAKROMOL.CHEM.RAPID.COMMUN. 3, 127-132 (1982) on décrit l'utilisation de tétraalkylthiurame comme additif lors de la polymérisation radicalaire de monomères vinyliques, ledit additif étant dénommé "iniferter" car il présente lors de cette polymérisation la triple fonction d'initiateur de radicaux libres, d'agent de transfert de chaîne et d'agent bloqueur de chaîne.

Dans les revues Polymer, 29, 1909-1917, (1988) et J.MACROMOL.Sci.-Chem. A 25(9), 1089-1126 (1988), on décrit des "iniferters" polymères à base de poly(disulfure de thiurame) porteurs de blocs ou segments polyphosphonamide.

Ces "iniferters" polymères, désignés par la suite par l'abréviation "polyiniferters" sont préparés par la synthèse préalable d'une macrodiamine obtenue par exemple par réaction de dichlorure d'acide phénylphosphonique sur la pipérazine ou la N,N′-diméthyl-1,6-hexanediamine. L'extension de chaîne de cette macrodiamine par une réaction de dithiocarbamylation suivie d'un couplage par voie oxydante donne un poly(disulfure de thiurame) porteur de la fonction phosphonamide. La polymérisation thermique radicalaire de méthacrylate de méthyle ou de styrène en présence de ces "polyiniferters", conduit à la formation de copolymère séquencé polyvinylique/polyphosphonamide.

La présente invention vise un nouveau "polyiniferter" qui est un copolymère séquencé polydiorganosiloxane/disulfure de thiurame de formule :

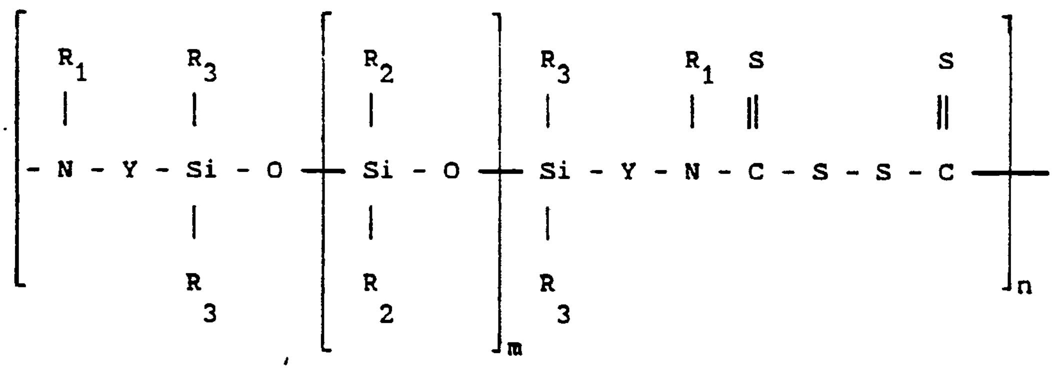 (1)

dans laquelle :
- les symboles $R_1$, identiques ou différents, représentent : un radical organique monovalent choisi parmi :
. un radical alkyle en $C_1$-$C_{12}$, linéaire ou ramifié éventuellement interrompu par un hétéroatome choisi parmi O et N et éventuellement substitué par un groupe amine tertiaire,
. un radical cycloalkyle en $C_3$-$C_8$,
. un groupe aryle, aralkyle et alkylaryle,
- les symboles Y, identiques ou différents, sont des radicaux organiques divalents liés à l'atome de silicium par une liaison Si-C,
- les symboles $R_2$, identiques ou différents, représentent des radicaux hydrocarbonés monovalents choisis parmi :
. un radical alkyle en $C_1$-$C_{12}$ linéaire ou ramifié,
. le radical trifluoro-3,3,3,propyle,
. le radical phényle,
- les symboles $R_3$, identiques ou différents, sont choisis parmi les radicaux $R_2$ et un radical alcoxy ayant de 1 à 8 atomes de carbone,
- m est un nombre entier compris entre 0 et 500, de préférence entre 2 et 200 inclus,

- n est un nombre entier compris entre 2 et 100 inclus, de préférence entre 7 et 25.

Les copolymères de formule (1) sont :

- soit bloqués à chaque extrémité de la chaîne par un segment monovalent A′ :

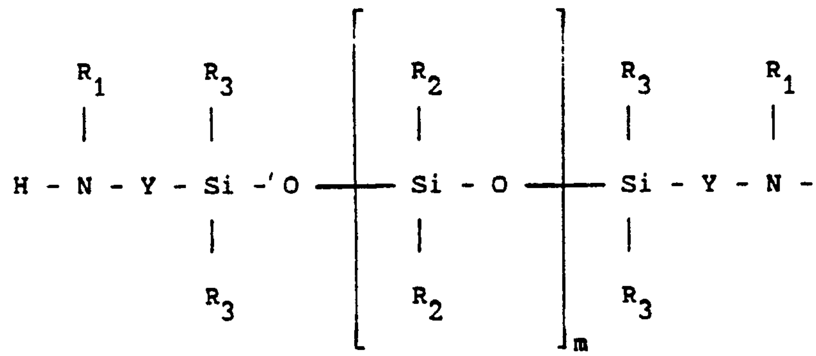

ils sont alors représentés par la formule :

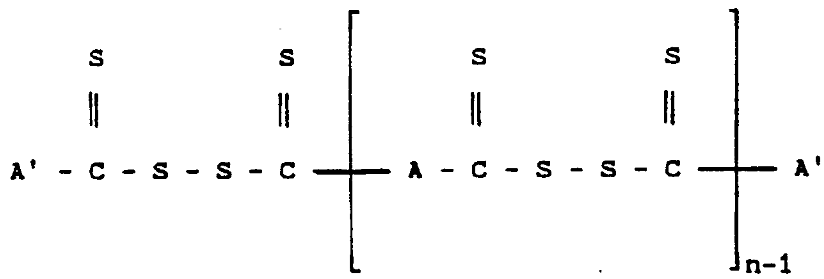

A représentant le segment divalent de formule :

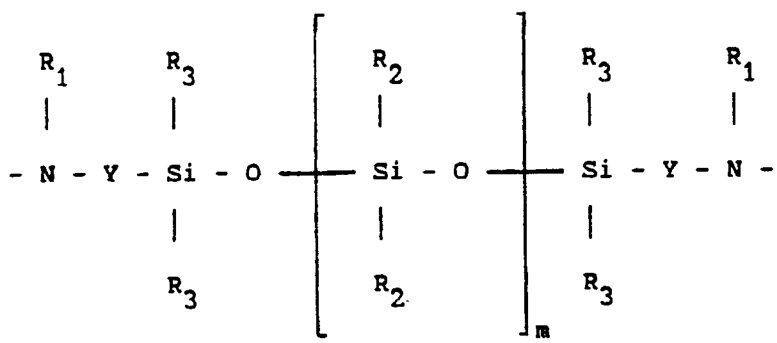

- soit cyclisés sur eux-mêmes et ils sont alors représentés par la formule :

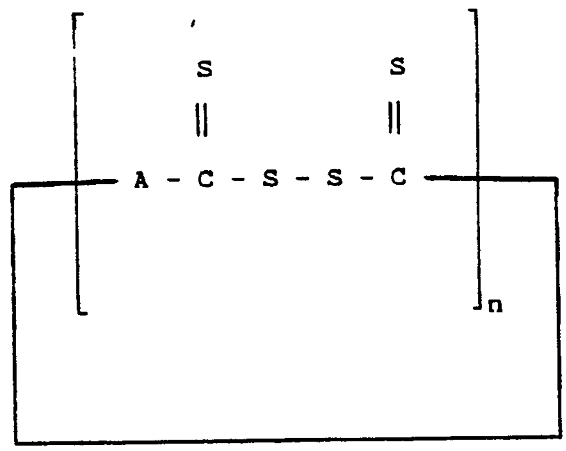

Les copolymères de formule (1) peuvent être préparés par réaction d'un polydiorganosiloxane de formule :

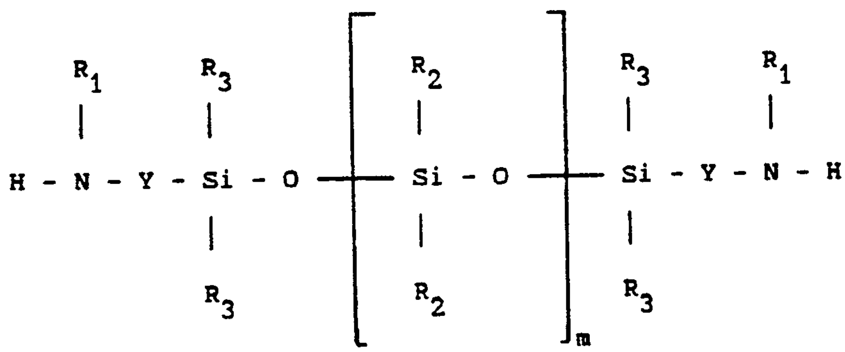

(2)

dans laquelle $R_1$, $R_2$, $R_3$, Y et m ont la signification donnée à la formule (1) ci-dessus, sur le disulfure de carbone, en présence d'un agent oxydant et d'une amine tertiaire.

Comme amine tertiaire on peut utiliser par exemple la tri-éthylamine et la pyridine.

Pour obtenir une valeur de n élevée, comprise entre environ 10 et 100, il est recommandé d'utiliser un rapport molaire du polymère (2) à $CS_2$ de 1/2 en présence de deux moles d'amine tertiaire par mole de polymère (2).

Si ce rapport molaire est légèrement supérieur à 1/2, la valeur de n est faible et comprise entre 2 et 5.

La réaction est exothermique. On peut en contrôler l'exothermicité par les moyens habituels.

La réaction peut être effectuée en milieu solvant ou en masse. Dans ce dernier cas $CS_2$ peut jouer le rôle de solvant.

Le polydiorganosiloxane de formule (2) peut être en particulier préparé selon l'un des deux procédés suivants :

- selon un premier procédé où $R_3$ est identique à $R_2$ on fait réagir un polymère α,ω-(dihydrogéno)-polydiorganosiloxane de formule :

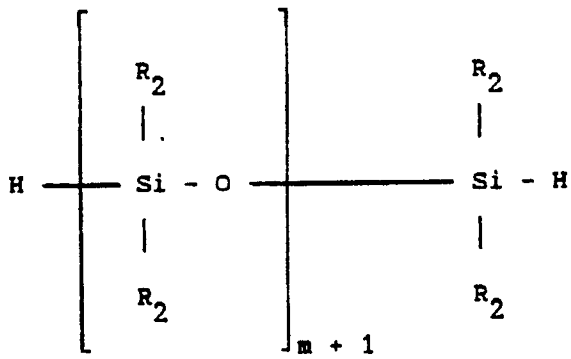 (3)

sur un composé organique à fonction amine secondaire et à insaturation oléfinique de formule :

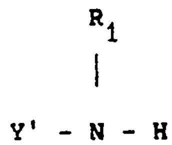 (4)

en présence d'une quantité catalytiquement efficace d'un catalyseur à base de platine ou à base d'un métal du groupe du platine (rhodium, osmium, rhénium, etc ....).

Dans les formules (3) et (4), les symboles $R_1$, $R_2$, m ont la même signification que ci-dessus, Y′ est identique à Y sauf qu'il présente en outre une insaturation oléfinique.

Les catalyseurs au platine utilisés pour réaliser la réaction d'hydrosilylation des polymères de formule (3) sur le composé organique de formule (4) sont amplement décrits dans la littérature, on peut en particulier citer l'acide chloroplatinique $H_2PtCl_6$, les complexes du platine et d'un produit organique décrit dans les brevets américains US-A-3 159 601, US-A-3 159 602, US-A-3 220 972 et les brevets européens EP-A-57 459, EP-A-188 978 et EP-A-190 530 et les complexes du platine et d'organopolysiloxane vinylé décrits dans les brevets américains US-A-3 419 593, US-A-3 377 432 et US-A-3 814 730.

Pour faire réagir le polymère à SiH de formule (3) sur le composé de formule (4) on utilise généralement une quantité de catalyseur au platine calculée en poids de platine métal comprise entre 5 et 600 ppm, de préférence entre 10 et 200 ppm basés sur le poids de polymère à SiH de formule (3).

La réaction d'hydrosilylation peut avoir lieu en masse ou au sein d'un solvant organique volatil tel que le toluène, l'heptane, le xylène, le tétrahydrofuranne et le tétrachloroéthylène.

Cette réaction est effectuée de préférence en absence de tout solvant aprotique (eau et alcool par exemple).

Il est généralement souhaitable de chauffer le mélange réactionnel à une température comprise entre 60 et 120 °C pendant le temps nécessaire pour que la réaction soit complète. Par ailleurs il est souhaitable d'ajouter goutte-à-goutte le polymère à SiH sur le composé de formule (4) éventuellement en solution dans un solvant organique.

On vérifie que la réaction est complète en dosant les SiH résiduels par la potasse alcoolique puis on élimine le solvant par exemple par distillation sous pression réduite.

Le polymère fonctionnalisé obtenu de formule (2) peut être purifié, par exemple par passage sur une colonne absorbante de silice.

Comme composé de formule (4) on recommande d'utiliser les N-(monosubstitués)allylamines de formule :

$CH_2 = CH - CH_2 - NHR_1$

ou $R_1$ représente de préférence les radicaux méthyle, éthyle, propyle, phényle et cyclohexyle.

Selon un deuxième procédé où $R_3$ peut désigner en outre un groupe hydrolysable choisi parmi les radicaux alcoxy ayant de 1 à 8 atomes de carbone, on fait réagir un polymère α,ω-(dihydroxy)-polydiorganosiloxane de formule :

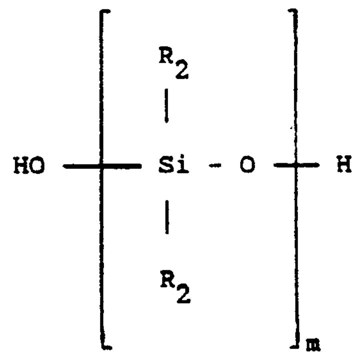

(5)

sur un aminotrialcoxysilane de formule :

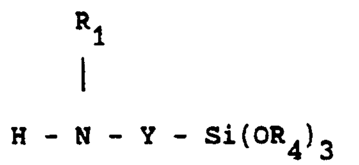

(6)

dans lesquelles les symboles $R_1$, $R_2$, m ont la signification donnée ci-dessus et les radicaux $R_4$, identiques ou différents, représentent un radical alkyle ou alcoxyalkyle en $C_1$-$C_8$, de préférence $R_4$ est méthoxy ou éthoxy.

La réaction de condensation entre le polymère (5) et le silane (6) s'effectue à une température comprise entre 40 et 140 °C, de préférence en milieu solvant, pendant une période de temps suffisante pour éliminer la quantité d'alcool $R_4OH$ engendré. Des silanes de formule (6) utilisables sont en particulier décrits dans les brevets US-A-3 888 815, US-A-4 481 364 et US-A-4 556 722 cités comme référence.

Parmi les silanes de formule (6) on peut en particulier utiliser les silanes de formules :

$(CH_3O)_3Si(CH_2)_3NHCH_3$

,

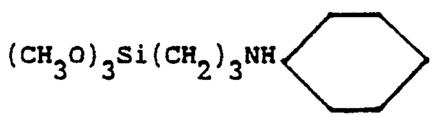

$(C_2H_5O)_3Si(CH_2)_3NHCH_3$

$(CH_3O)_3Si(CH_2)_3NH(CH_2)_2NH_2$

$(C_2H_5O)_3Si(CH_2)_3NH(CH_2)_2NH_2$

$(CH_3O)_3Si(CH_2)_4NHCH_3$

$(CH_3O)_3Si(CH_2)_3$-S-$(CH_2)_2NHC_2H_5$

$(CH_3O)_3Si(CH_2)_3$-O-$(CH_2)_2NHCH_3$

$(CH_3O)_3Si(CH_2)_3NH(CH_2)_2$-S-$CH_3$

Dans les formules (1) à (6) ci-dessus des exemples de radicaux $R_1$ sont méthyle, éthyle, propyle, butyle, éthyl-2 hexyle, n-octyle, dodécyle, cyclopentyle, cyclobutyle, phényle, benzyle et tolyle.

Y est de préférence un chaînon alkylène linéaire ou ramifié en $C_1$-$C_8$, de préférence en $C_3$-$C_8$, éventuellement interrompu par un hétéroatome choisi parmi O et S.

Comme exemples de chaînons Y on peut citer :

$-CH_2-$, $-(CH_2)_2-$, $-(CH_2)_3-$, $CH_2-CH(CH_3)-CH_2-$, $-(CH_2)_3-O-(CH_2)_2-$, $-(CH_2)_3-S-(CH_2)_2-$, $-(CH_2)_{12}-$.

Les exemples de radicaux alkyle pour $R_2$ sont les mêmes que ceux donnés pour $R_1$, de préférence $R_1$ est choisi parmi méthyle et phényle. Par conséquent le segment diorganopolysiloxane comporte principalement des motifs choisis parmi diméthylsiloxy, méthylphénylsiloxy et diphénylsiloxy.

De préférence au moins 50 % en nombre des radiciaux $R_2$ sont méthyle.

La présente invention a également pour objet l'utilisation du copolymère de formule (1) comme agent "polyiniferter" lors de la polymérisation radicalaire de monomère vinyliques. Il est recommandé d'introduire le "polyiniferter" en début de polymérisation, avec le mélange de monomères vinyliques.

Comme monomères vinyliques utilisables on peut notamment citer :
- les monomères acryliques et méthacryliques choisis plus particulièrement parmi les acrylates et les méthacrylates d'alkyle en $C_1$-$C_{12}$ tels que le méthacrylate de méthyle, le méthacrylate d'éthyle, le méthacrylate d'isopropyle, le méthacrylate de n-butyle,
- les monomères acryliques et méthacryliques porteurs d'au moins un groupe hydroxyle tels que le méthacrylate d'hydroxyéthyle, le méthacrylate d'hydroxypropyle, le méthacrylate de diéthylèneglycol, le méthacrylate de dipropylèneglycol, le méthacrylate de triéthylèneglycol et les acrylates correspondants,
- les monomères acrylamides et méthacrylamides.
- les monomères styrènes tels que le styrène, l'α-méthylstyrène, le tert-butyl-styrène et le vinyltoluène.

Sans vouloir limiter l'invention à une théorie scientifique, la réaction radicalaire est supposée s'effectuer suivant le schéma réactionnel suivant :

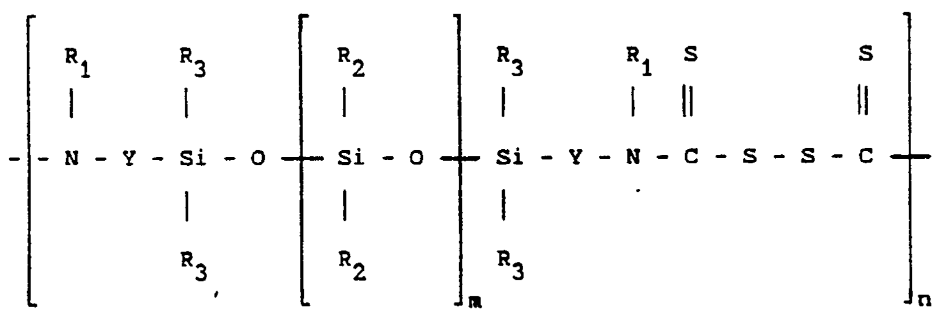
(1)

+

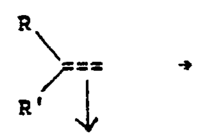

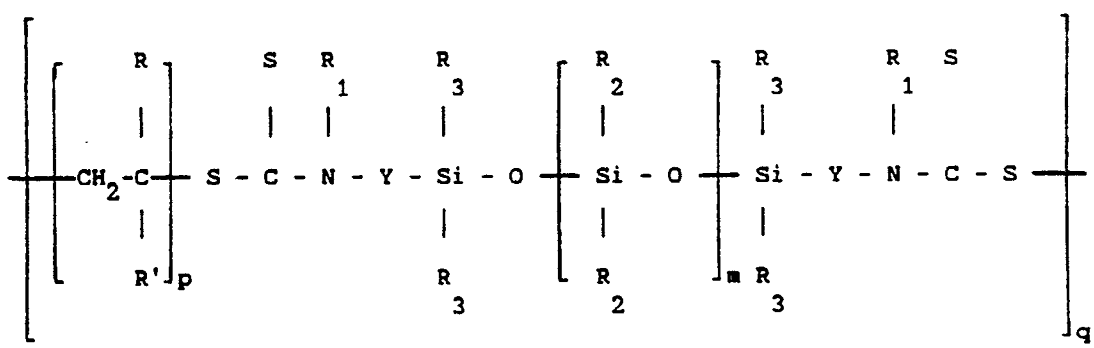
(7)

Dans la formule (7), p indique le degré de polymérisation du monomère vinylique et q le nombre moyen de séquences polydiorganopolysiloxane/polyvinilique par chaîne, q est généralement compris entre 2 et 100, de préférence entre 2 et 10 et p est compris entre 50 et 1 000, de préférence entre 50 et 300.

La réaction de polymérisation est effectuée à une température de 50-160 °C, de préférence 60-90 °C.

Elle est effectuée de préférence en masse dans le cas où le "polyiniferter" est soluble dans le monomère vinylique comme par exemple dans le cas du styrène et du méthacrylate de méthyle. Dans le cas contraire, comme par exemple pour l'acrylamide, on utilise un solvant comme par exemple THF (tétrahydrofuranne).

Au cours de la polymérisation radicalaire, le bloc polyvinylique s'insère entre les deux soufres du groupe thiurame. Le poids moléculaire de chacun des blocs polyvinyliques dépend du rapport molaire/monomère vinylique/"polyiniferter".

La quantité d'"iniferter" introduite est comprise généralement entre 1 et 50 parties en poids, de préférence de 2 à 20 parties, pour 100 parties en poids de monomère vinylique. Quand la quantité de "polyiniferter" introduite est importante, la vitesse de polymérisation décroît, le "polyiniferter" jouant alors principalement le rôle d'agent de terminaison des radicaux polymères.

Par ailleurs, au moment de la polymérisation, on peut ajouter un agent oxydant tel qu'$I_2$ au mélange réactionnel formé de monomères vinyliques, du polymère de formule (2), de $CS_2$ et de l'amine tertiaire en vue d'obtenir in-situ un système oxydo-réducteur permettant d'abaisser la température de décomposition du copolymère diorganopolysiloxane/disulfure de thiurame.

Le copolymère séquencé diorganopolysiloxane/polyvinylique présente toujours des extrémités de chaînes qui sont des blocs diorganopolysiloxanes, le copolymère (7) peut donc être également représenté par la formule :

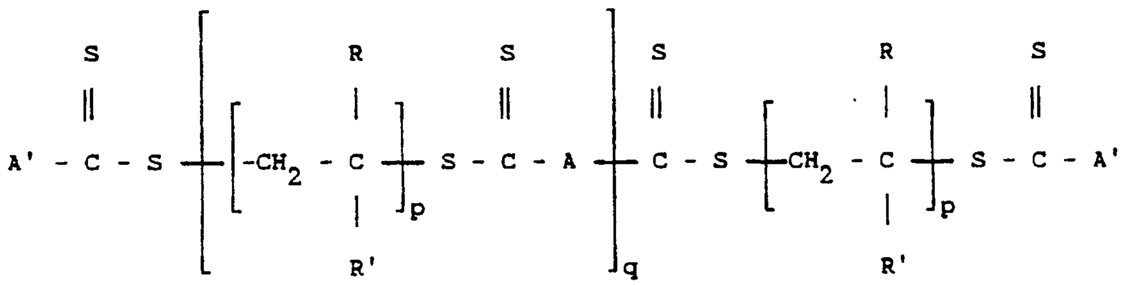

R, R′, A, A′ et q ayant la signification donnée ci-dessus.

En partant de monomères vinyliques tels que styrène et acrylates et, en utilisant les "polyiniferters" selon l'invention, et en effectuant la copolymérisation suivant un taux de conversion élevé (par exemple entre 20 et 100 %) des monomères vinyliques, il est possible d'obtenir des copolymères ayant un indice de polydispersité tout à fait satisfaisant, ce qui est un résultat inattendu dans le cadre d'une polymérisation radicalaire à taux élevé de conversion. Les copolymères formés à partir d'acrylamide sont solubles ou insolubles dans l'eau suivant leur teneur en silicium et peuvent être utilisés comme polymères amphiphiles.

Le procédé de copolymérisation par voie radicalaire selon l'invention constitue donc une nouvelle voie pour synthétiser des copolymères à bloc polydiorganosiloxane/polyvinylique de structure chimique bien définie et thermiquement stable jusqu'à une température de 200 °C et même au-delà.

L'invention est illustrée dans les exemples ci-après. Les poids moléculaires des polymères sont mesurés par chromatographie par perméation gazeuse (GPC utilisant un étalon polystyrène ou polyméthylméthacrylate et le tétrahydrofuranne (THF) comme éluant. Dans ce qui suit ou ce qui précède, tous les pourcentages et parties sont en poids, sauf mentions contraires.

- EXEMPLE 1 :

Exemple 1.a. : préparation du polydiméthysiloxane de formule :

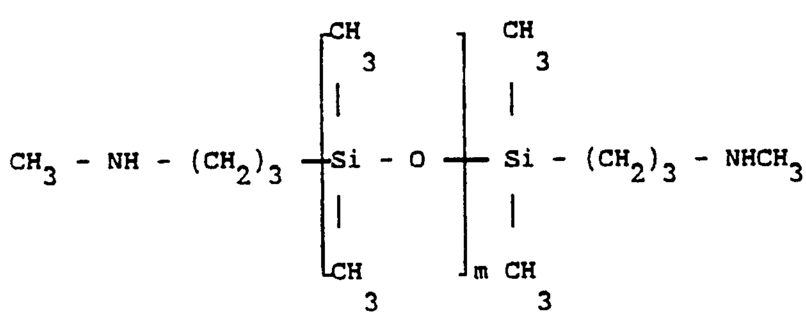

Ce polymère est obtenu en ajoutant goutte-à-goutte sous argon et en faisant réagir pendant 12 heures à 120 °C 15 g d'un α,ω-(dihydro)polydiméthyl-siloxane de formule :

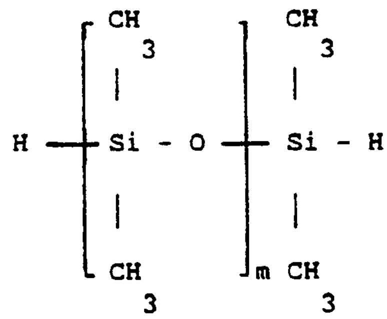

de masse moléculaire en nombre 3 050 sur 1,5 ml d'allyl-N-méthylamine en présence de 15 mg d'acide chloroplatinique $H_2PtCl_6$ en milieu anhydre.

Exemple 1.b. :

on répète exactement le mode opératoire de l'exemple 1.a., sauf que l'on part d'une huile α,ω-(dihydro)-polydiméthylsiloxane de masse moléculaire en nombre de 400.

Le produit obtenu présente une masse moléculaire en nombre de 625 et une fonctionalité de 2,12.

Exemple 1.c. :

on répète exactement le mode opératoire de l'exemple 1.a., sauf que l'on part d'une huile α,ω-(dihydro)-polydiméthylsiloxane de masse moléculaire en nombre de 1 090.

Le produit obtenu présente une masse moléculaire en nombre de 1 550 et une fonctionalité de 1,82.

- EXEMPLE 2 : synthèse du poly(thiurame)disulfure de formule :

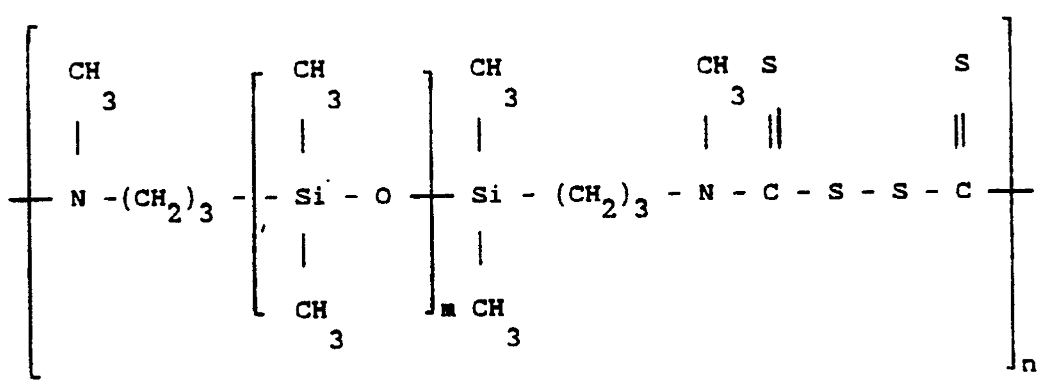

Exemple 2.a. :

on dissout 14 g d'α,ω-(bis-amino)polydiméthylsiloxane obtenu à l'exemple 1.a. dans 50 ml de chloroforme et on refroidit à 10 °C. On ajoute 2 ml de triéthylamine puis 0,7 g de $CS_2$.

A la solution obtenue, on ajoute goutte-à-goutte, sous agitation, une solution de $I_2$ dans $CHCl_3$ jusqu'à ce que la couleur violette persiste. On lave la solution à l'eau refroidie par de la glace, on sèche sur $Na_2SO_4$ au moins 24 heures et on récupère le produit final sous forme d'une huile brune après élimination de $CHCl_3$, par évaporation sous pression réduite à température ambiante. Considérant la quantité d'$I_2$ consommée et le pourcentage d'azote et de soufre dans le produit obtenu on en déduit que la réaction est quantitative. L'analyse élémentaire du produit obtenu est donnée au tableau 1 ci-après.

Exemple 2.b. :

on répète exactement le mode opératoire de l'exemple 2.a. sauf que l'on utilise comme produit de départ celui de l'exemple 1.b.

L'analyse élémentaire du produit obtenu est donnée au tableau 1 ci-après.

Exemple 2.c. :

on répète exactement le mode opératoire de l'exemple 2.a. sauf que l'on utilise comme produit de départ celui de l'exemple 1.c.

L'analyse élémentaire du produit obtenu est donnée au tableau 1 ci-après.

- EXEMPLES 3 A 11 :

Polymérisation radicalaire d'un monomère styrène (exemples 3 à 7) ou d'un monomère méthacrylate de méthyle (exemples 8 à 11) avec le "polyiniferter" de l'exemple 2.a.

Mode opératoire :

on effectue les polymérisations dans un tube de verre, sous une pression réduite de 0,133 KPa, scellé de 110 x 140 mm. Le "polyiniferter" étant soluble dans les monomères vinyliques on effectue la réaction en masse.

Le contenu du tube est désaéré par au moins trois cycles de congélation, de mise sous vide et de décongélation.

Le tube est ensuite scellé à une pression de 13,3 Pa.

Le tube est immédiatement enveloppé dans du papier aluminium et la polymérisation est conduite dans un bain d'huile à la température requise dans le temps désiré. Après la polymérisation, le tube est retiré, réfrigéré dans un mélange de glace sèche-isopropanol et le polymère, dilué avec du tétrahydrofuranne est précipité goutte-à-goutte dans le méthanol. Le précipité ou le produit résineux obtenu est recueilli dans un creuset en verre fritté, lavé à l'éther de pétrole, séché à 45 °C pendant toute une nuit et pesé.

On a effectué diverses polymérisations de styrène (exemples 3 à 7) ou de méthacrylate de méthyle (exemples 8 à 11) en faisant varier la concentration {C} en grammes de "polyiniferter" par litre de monomère, la température ($\theta$) et le temps de polymérisation (t) en heures et mn. Le copolymère obtenu est caractérisé par sa masse moléculaire moyenne en nombre $\overline{M}n$, sa masse moléculaire moyenne en poids $\overline{M}w$ ; l'indice de polydispersité Ip = $\overline{M}w : \overline{M}n$ ; le pourcentage en poids de polydiméthylsiloxane (D %), TF le taux de conversion des monomères vinyliques obtenu en fin de réaction, et n le nombre de blocs de formule :

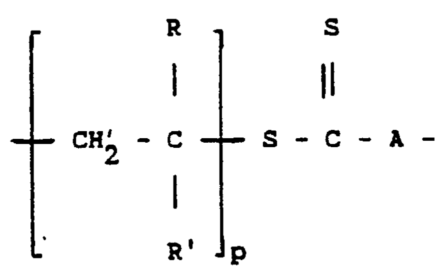

n étant calculé à partir du pourcentage en poids de Si.

Les résultats obtenus sont rassemblés dans le tableau 2 ci-après.

- EXEMPLES 12 A 19 :

on répète exactement le mode opératoire des exemples 3 à 11 sauf que l'on remplace le produit de

départ de l'exemple 2.a., par le produit de départ de l'exemple 2.c.

Les exemples 12 à 15 visent la polymérisation de styrène et les exemples 16 à 19 visent la polymérisation de méthacrylate de méthyle.

Les résultats obtenus sont rassemblés dans le tableau 3 ci-après.

- EXEMPLES 20 A 27 : polymérisation radicalaire d'un monomère acrylamide avec le "polyininferter" de l'exemple 2.b. (exemples 20 à 26) et 2.c. (exemples 26 et 27).

Mode opératoire :

on utilise le même mode opératoire qu'aux exemples 3 à 11, sauf que la réaction de polymérisation est effectuée à 70 °C en solution dans THF (tétrahydrofuranne).

Le copolymère formé précipite dans le milieu réactionnel. Il est filtré, lavé avec THF et filtré. Les conditions réactionnelles et la caractérisation du copolymère formé sont rassemblés dans le tableau 4 ci-après.

Du tableau 4, on remarque que la solubilité dans l'eau du copolymère obtenu dépend de sa teneur en polydiméthylsiloxane (D %), dans ce tableau 4 est indiqué la concentration (M) du monomère acrylamide dans le milieu réactionnel en mole par litre, le taux de conversion en % du monomère en fin de réaction (T %), la concentration du "polyininferter" (PI) en g par 100 ml de volume réactionnel et la solubilité du copolymère obtenu dans l'eau.

TABLEAU 1

| (analyse élémentaire) | | | | | | | | | | |
|---|---|---|---|---|---|---|---|---|---|---|
| POLY/DISULFURE DE THIURAME DE L'EXEMPLE | C % | | H % | | N % | | S % | | Si % | |
| | calculé | trouvé | calculé | trouvé | calculé | trouvé | calculé | trouvé | calculé | trouvé |
| 2.a. | 32,96 | 33,06 | 7,98 | 8,07 | 0,64 | 0,53 | 2,75 | 2,92 | 35,40 | 34,98 |
| 2.b. | 35,95 | 36,81 | 7,47 | 7,62 | 3,52 | 3,63 | 16,10 | 15,63 | 25,14 | 24,19 |
| 2.c. | 33,90 | 34,25 | 7,77 | 7,90 | 1,65 | 1,62 | 7,52 | 7,69 | 31,30 | 30,61 |

TABLEAU 2

| EXEMPLE | {C} g/l | θ (°C) | t (h) | (TF) (%) | $\overline{M}n$ | $\overline{M}w$ | IP | D (%) | n |
|---|---|---|---|---|---|---|---|---|---|
| 3 | 400 | 85 | 24 | 96 | 72 000 | 380 000 | 1,97 | 17,7 | 4 |
| 4 | 83 | 85 | 24 | 94 | 144 000 | 272 000 | 1,90 | 5,3 | 2,5 |
| 5 | 133 | 85 | 24 | 95 | 108 500 | 198 379 | 1,83 | 8,5 | 2,8 |
| 6 | 200 | 85 | 24 | 97 | 84 400 | 156 300 | 1,85 | 11 | 3 |
| 7 | 300 | 85 | 24 | 98 | 72 500 | 130 000 | 1,80 | 15 | 3,5 |
| 8 | 200 | 85 | 24 | 97 | 90 000 | 184 000 | 2 | 7,4 | 2,2 |
| 9 | 300 | 85 | 24 | 91 | 77 000 | 157 000 | 2 | 8,1 | 2,5 |
| 10 | 400 | 85 | 24 | 99 | 67 000 | 127 000 | 1,8 | 9,5 | 2,7 |
| 11 | 84 | 85 | 24 | 95 | 103 000 | 323 000 | 3 | 4,2 | 2,1 |

TABLEAU 3

| EXEMPLE | {C} g/l | θ (°C) | t (h) | (T) (%) | $\overline{M}n \times 10^{-4}$ | $\overline{M}w \times 10^{-4}$ | IP | D (%) | n |
|---|---|---|---|---|---|---|---|---|---|
| 12 | 80 | 90 | 1,5 | 17,8 | 10,7 | 27 | 2,5 | 8,6 | 5,60 |
| 13 | 80 | 90 | 3 | 33,0 | 11,7 | 31,5 | 2,7 | 8,4 | 6,30 |
| 14 | 80 | 90 | 5 | 49,6 | 8,6 | 24 | 2,8 | 7,4 | 7,10 |
| 15 | 80 | 90 | 9,5 | 71,0 | 13,5 | 37,5 | 2,8 | 6,3 | 8,60 |
| 16 | 100 | 85 | 1,5 | 7,5 | 4,6 | 16,3 | 3,5 | 10,9 | 2,00 |
| 17 | 100 | 85 | 3,5 | 20 | 6,4 | 25,9 | 4,0 | 8,1 | 2,38 |
| 18 | 100 | 85 | 6 | 40 | 8 | 21 | 2,6 | 6,6 | 2,45 |
| 19 | 100 | 85 | 8,5 | 64 | 10,3 | 32,3 | 3,1 | 4,3 | 2,81 |

TABLEAU 4

| EXEMPLE | {M} | T % | {PI} | D (%) | Solubilité dans l'eau |
|---|---|---|---|---|---|
| 20 | 2,11 | 20 | 0,25 | 0,90 | soluble |
| 21 | 2,11 | 18,6 | 0,5 | 1,11 | soluble |
| 22 | 2,11 | 21 | 1,0 | 2,11 | gonflement |
| 23 | 2,11 | 15 | 1 | 5,76 | insoluble |
| 24 | 2,11 | 19 | 2,0 | 7,10 | insoluble |
| 25 | 2,11 | 12 | 2,5* | 17,80 | insoluble |
| 26 | 1,88 | 14,5 | 1.5 | 2,90 | soluble |
| 27 | 1,88 | 8,0 | 2,76 | 5,23 | soluble après gonflement |

* : température de réaction 80 °C

## Revendications

1. - Copolymère polydiorganosiloxane/disulfure de thiurame de formule :

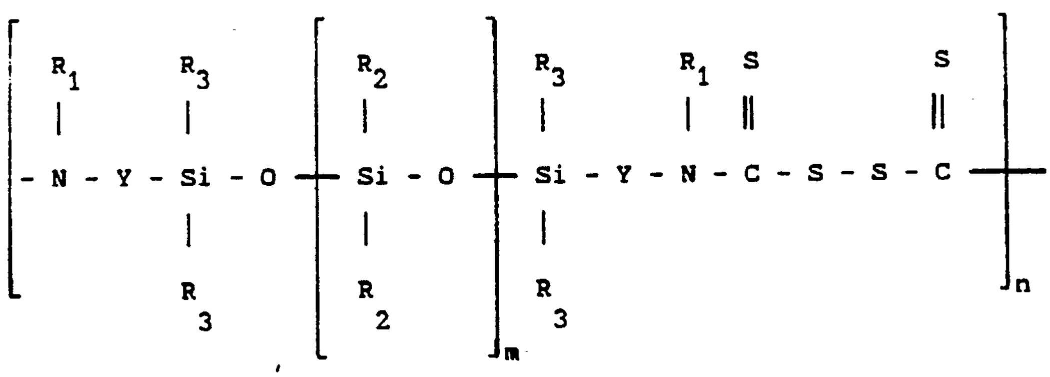 (1)

dans laquelle :

- les symboles $R_1$, identiques ou différents, représentent : un radical organique monovalent choisi parmi :
  . un radical alkyle en $C_1$-$C_{12}$, linéaire ou ramifié éventuellement interrompu par un hétéroatome choisi parmi O et N et éventuellement substitué par un groupe amine tertiaire,
  . un radical cycloalkyle en $C_3$-$C_8$,
  . un groupe aryle, aralkyle et alkylaryle,
- les symboles Y, identiques ou différents, sont des radicaux organiques divalents liés à l'atome de silicium par une liaison Si-C,
- les symboles $R_2$, identiques ou différents, représentent des radicaux hydrocarbonés monovalents choisis parmi :
  . un radical alkyle en $C_1$-$C_{12}$ linéaire ou ramifié,
  . le radical trifluoro-3,3,propyle,
  . le radical phényle,
- les symboles $R_3$, identiques ou différents, sont choisis parmi les radicaux $R_2$ et un radical alcoxy ayant de 1 à 8 atomes de carbone,
- m est un nombre entier compris entre 0 et 500, de préférence entre 2 et 200 inclus,
- n est un nombre entier compris entre 2 et 100 inclus.

2. - Copolymère selon la revendication 1, caractérisé en ce que $R_1$ est méthyle au cyclohexyle, $R_2$ est méthyle et/ou phényle, Y est $-(CH_2)_3$-et $R_3$ est méthyle ou alcoxy en $C_1$-$C_8$.

3. - Procédé de préparation d'un copolymère tel que défini à la revendication 1 ou 2 par réaction d'un

polydiorganosiloxane de formule :

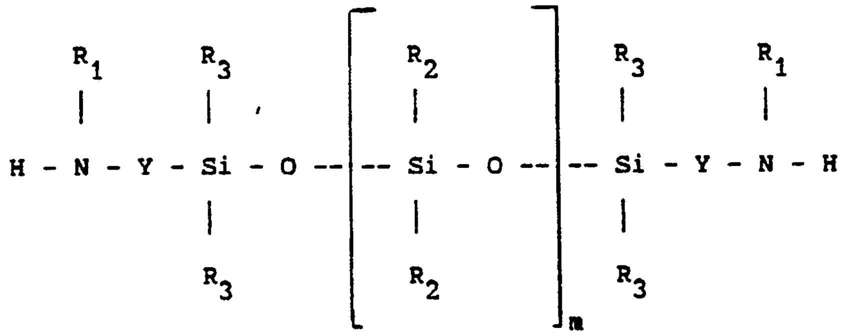

(2)

dans laquelle $R_1$, $R_2$, $R_3$, Y et m ont la signification donnée à la formule (1) ci-dessus, sur le disulfure de carbone, en présence d'un agent oxydant et d'une amine tertiaire.

4. - Procédé selon la revendication 3, caractérisé en ce que l'agent oxydant est l'iode et l'amine tertiaire est la triéthylamine.

5. - Utilisation d'un copolymère tel que défini à la revendication 1 ou 2, comme agent ayant la triple fonction d'initiateur d'agent de transfert de chaîne et d'agent bloqueur de chaîne lors de la polymérisation radicalaire de monomères vinyliques.

6. - Utilisation selon la revendication 5, caractérisée en ce que le monomère vinylique est un monomère acrylique, méthacrylique, acrylamide, méthacrylamide ou styrène.